(19) Europäisches Patentamt
European Patent Office
Office européen des brevets

(11) Numéro de publication : **0 387 118 B1**

(12) **FASCICULE DE BREVET EUROPEEN**

(45) Date de publication du fascicule du brevet : **20.04.94 Bulletin 94/16**

(51) Int. Cl.$^5$ : **C08G 63/42,** C08G 63/58

(21) Numéro de dépôt : **90400489.2**

(22) Date de dépôt : **21.02.90**

# (54) Procédé de condensation d'au moins un époxyde sur au moins un anhydride cyclique en présence d'un catalyseur à base d'au moins un complexe de titane.

Le dossier contient des informations techniques présentées postérieurement au dépôt de la demande et ne figurant pas dans le présent fascicule.

(30) Priorité : **10.03.89 FR 89031389**

(43) Date de publication de la demande : **12.09.90 Bulletin 90/37**

(45) Mention de la délivrance du brevet : **20.04.94 Bulletin 94/16**

(84) Etats contractants désignés : **AT BE CH DE ES FR GB IT LI LU NL SE**

(56) Documents cités : **GB-A- 1 101 247**

(73) Titulaire : **INSTITUT FRANCAIS DU PETROLE**
**4, Avenue de Bois Préau**
**F-92502 Rueil-Malmaison (FR)**

Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**
Titulaire : **ELF FRANCE**
**Tour Elf 2, Place de la Coupole**
**LA DEFENSE 6 - 92400 Courbevoie (FR)**

(72) Inventeur : **Bagrel, Valérie**
**5, rue Durand Bénech**
**F-92260 Fontenay-aux-Roses (FR)**
Inventeur : **Garapon, Jacques**
**120, rue Mazenod**
**F-69003 Lyon (FR)**
Inventeur : **Touet, Rémi**
**Résidence Mutualiste, Boîte Postale 220**
**F-38522 Saint Egreve Cedex (FR)**
Inventeur : **Huet, Catherine**
**50, route de Givry, SAINT REMY**
**F-71100 Chalon sur Saone (FR)**
Inventeur : **Damin, Bernard**
**162, Grande Rue**
**F-69600 Oullins (FR)**

(74) Mandataire : **Andreeff, François**
**INSTITUT FRANCAIS DU PETROLE 4, avenue de Bois-Préau**
**F-92502 Rueil-Malmaison (FR)**

**EP 0 387 118 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé de condensation d'au moins un époxyde aliphatique ayant au moins 8 atomes de carbone dans sa molécule, sur au moins un anhydride cyclique d'un acide dicarboxylique en présence d'un catalyseur à base d'au moins un complexe de titane.

La présente invention a également pour objet un procédé de production d'un copolymère de condensation comportant des chaînes latérales "pendantes", présentant une alternance régulière de chaque type de composés mis en réaction et résultant de la condensation d'au moins un époxyde aliphatique ayant au moins 8 atomes de carbone dans sa molécule sur au moins un anhydride cyclique d'un acide dicarboxylique.

Ce type de condensation ou de polyestérification se différencie du procédé classique où l'on met en oeuvre un composé dihydroxylé (ou diol) et un anhydride ou un acide dicarboxylique, en particulier par le fait que la température de polycondensation ne dépasse habituellement pas environ 150°C et surtout par le fait qu'il ne se dégage aucune matière volatile au cours de la réaction.

La condensation entre un époxyde (ou dérivé époxydé) et un anhydride cyclique d'un acide dicarboxylique a suscité de nombreux travaux, résumés, par exemple, par LUSTON et VASS (Advances in Polymer Sciences 1984, Vol. 56, pages 91 et suivantes) ou par ISHII et SAKAI (Ring opening polymerisation, pages 13 et suivantes, édité par K.C. FRISCH et S.L.REEGEN, MARCEL DEKKER 1969).

L'examen des travaux cités montre que l'un des problèmes majeurs posé par ce type de condensation est l'homopolymérisation de l'époxyde conduisant à l'obtention d'un polyéther-polyester séquencé ou à des mélanges de polymères, en particulier lorsque l'on utilise des acides de LEWIS ($TiCl_4$, $BF_3$...) comme catalyseur de condensation. Afin de pallier cet inconvénient, on a proposé, dans l'art antérieur, l'emploi de catalyseurs anioniques ou de coordination.

FISCHER (Journal of Polymer Science 1960, Vol. 44, pages 155 et suivantes) a montré que l'utilisation d'amine tertiaire comme catalyseur de condensation d'un anhydride sur un époxyde permet d'obtenir une condensation alternée.

Cependant, ce type de catalyseur s'avère inopérant dans le cas de l'anhydride maléique, vraisemblablement en raison des réactions secondaires complexes avec les amines au niveau de la double liaison maléïque. D'autres types de catalyseurs anioniques, tels que les sels de métaux alcalins ou les sels de tétraalkylammonium, ont également été utilisés. Par exemple WADILL, MILLIGAN, et PEPELL (Industrial and Engineering Chemistry, Product Research and Development 1964, Vol. 3 part. 1 pages 53 et suivantes) décrivent l'emploi du chlorure de lithium en présence de substances protoniques à 150°C. Ces auteurs suggérent que l'homopolymérisation de l'époxyde intervient pour une part dans leur procédé. Comme exemple de catalyseur de coordination, on peut citer les dialkylzinc mentionnés par INOUE et al. (Makromoleculare Chemie 1969, Vol. 126, pages 250 et suivantes) ; ce type de catalyseur de coordination n'est en fait applicable, d'après INOUE et al., qu'au seul anhydride phtalique.

D'autres catalyseurs, à base de métaux de transition, ont également été décrits antérieurement. C'est ainsi que FISCHER (cité supra) observe une homopolymérisation partielle de l'époxyde glycidique lors de sa polycondensation avec l'anhydride phtalique en présence de titanate de tétrabutyle.

AKIMOTO (Journal of Polymer Science, Polymer Chemistry Edition, 1973, Vol. 11 pages 2247 et suivantes) décrit la copolymérisation de l'anhydride maléique avec l'épichlorhydrine en présence d'acétylacétonates de métaux de transition, par exemple le diacétylacétonate de zinc qui permet d'obtenir un copolymère alterné avec un rendement et une vitesse de réaction relativement importante ; par contre, le tétraacétylacétonate de titane s'avère pratiquement inactif.

L'un des problèmes que vise à résoudre la présente invention est l'obtention d'un copolymère à chaînes "pendantes", ayant une bonne alternance des motifs de chaque type de composés engagés dans la réaction.

Un autre problème que vise à résoudre la présente invention est l'emploi d'un catalyseur de condensation utilisable aussi bien avec un anhydride tel que l'anhydride maléïque qu'avec un anhydride tel que l'anhydride phtalique.

De façon surprenante, on a découvert qu'il est possible d'obtenir, avec une conversion élevée des produits de départ et une vitesse de réaction suffisante, en particulier dans le cas d'un anhydride du type de l'anhydride maléique, un polyester alterné, par condensation d'au moins un époxyde aliphatique ayant au moins 8 atomes de carbone dans sa molécule sur au moins un anhydride cyclique d'un acide dicarboxylique, en utilisant comme catalyseur de condensation au moins un complexe de titane de formule générale (I):

$$\text{(I)} \qquad Ti(OR)_2(L)_2$$

dans laquelle chacun des groupes R indépendamment représente un groupe hydrocarboné ayant de 1 à 10 atomes de carbone et chacun des groupes L indépendamment représente un ligand de formule générale (II) :

(II) 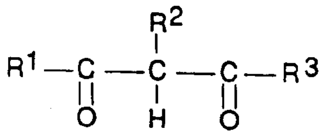

dans laquelle :

- $R^1$ et $R^2$ représentent chacun, indépendammment l' un de l'autre, un atome d'hydrogène, un groupe hydrocarboné ayant de 1 à 10 atomes de carbone, substitué ou non par au moins un hétéroatome ou par au moins un groupe hétéroatomique,
- $R^3$ représente un atome d'hydrogène, un groupe hydrocarboné ayant de 1 à 10 atomes de carbone, ou un groupe de formule générale $-O-R^4$ dans laquelle $R^4$ représente un groupe hydrocarboné ayant de 1 à 24 atomes de carbone.

Dans les complexes précités de formule générale (I) chacun des groupes L indépendamment représente de préférence un ligand de formule générale (II) dans laquelle :

- $R^2$ représente un atome d'hydrogène ou un groupe alkyle ayant de 1 à 6 atomes de carbone ou le plus souvent de 1 à 4 atomes de carbone ;
- $R^1$ et $R^3$, identiques ou différents, représentent chacun un groupe alkyle ayant de 1 à 6 atomes de carbone ou le plus souvent de 1 à 4 atomes de carbone ou
- R1 représente un groupe alkyle choisi parmi ceux cités ci-avant et $R^3$ représente un groupe de formule générale $-O-R^4$ dans laquelle $R^4$ représente de préférence un groupe alkyle ayant de 1 à 18 atomes de carbone et le plus souvent de 1 à 12 atomes de carbone ;

et dans laquelle chacun des groupes R indépendamment représente de préférence un groupe alkyle ayant de 1 à 6 atomes de carbone et le plus souvent un groupe alkyle ayant de 1 à 4 atomes de carbone tel que méthyle, éthyle, n-propyle, isopropyle, n-butyle, isobutyle, tertiobutyle et méthyl-1 propyle.

Dans une forme préférée de réalisation de l'invention, les complexes employés sont ceux dans lesquels les groupes L sont identiques et dans lesquels les groupes R sont identiques, ces groupes L et R étant choisi parmi les groupes préférés cités ci-avant.

On peut citer à titre d'exemples non limitatifs de ligand L préférés les composés suivants : la pentanedione-2,4, l'hexanedione-2,4, l'heptanedione-2,4, l'heptanedione-3,5, l'éthyl-3 pentanedione-2,4, la méthyl-5 hexanedione-2,4, l'octanedione-2,4, l'octanedione-3,5, la diméthyl-5,5 hexanedione-2,4, la méthyl-6 heptanedione-2,4, la diméthyl-2,2 nonanedione-3,5, la diméthyl-2,6 heptanedione-3,5 et les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique.

L'anhydride cyclique d'un acide dicarboxylique que l'on emploie dans la présente invention est de préférence un anhydride d'un acide dicarboxylique vicinal, saturé ou insaturé, et le plus souvent insaturé. L'anhydride cyclique utilisé comporte habituellement de 4 à 160 atomes de carbone et le plus souvent de 4 à 90 atomes de carbone dans sa molécule.

On peut ainsi citer, à titre d'exemples non limitatifs, l'anhydride maléïque, les anhydrides alkylmaléiques tels que par exemple l'anhydride citraconique ou méthylmaléique, les anhydrides halogénomaléiques tels que par exemple, les anhydrides chloro- et bromo-maléiques, l'anhydride succinique, les anhydrides alcénylsucciniques tels que par exemple l'anhydride itaconique ou méthylènesuccinique, l'anhydride n-octadécénylsuccinique et l'anhydride dodécénylsuccinique, les anhydrides polyalcénylsucciniques ayant habituellement une masse moléculaire moyenne en nombre de 200 à 3000 et le plus souvent de 250 à 2000 (tels que par exemples les anhydrides polypropénylsucciniques, en particulier l'anhydride tétrapropénylsuccinique, et les anhydrides polyisobuténylsucciniques souvent dénommés PIBSA), l'anhydride phtalique, les anhydrides phtaliques substitués par au moins un atome d'halogène et/ou par au moins un groupe alkyle, par exemple un groupe alkyle inférieur ayant de 1 à 4 atomes de carbone, l'anhydride trimellitique, l'anhydride cyclohexanedicarboxylique-1,2, les anhydrides cyclohexanedicarboxyliques-1,2 substitués par au moins un atome d'halogène et/ou par au moins un groupe alkyle, par exemple un groupe alkyle inférieur ayant de 1 à 4 atomes de carbone, l'anhydride nadique (bicyclo-[2,2,1] heptène-5 dicarboxylique-2,3) et les anhydrides nadiques substitués par au moins un atome d'halogène et/ou par au moins un groupe alkyle, par exemple un groupe alkyle inférieur ayant de 1 à 4 atomes de carbone. On peut encore citer à titre d'exemples d'anhydride cyclique d'un acide dicarboxylique non vicinal, l'anhydride glutarique, les anhydrides glutariques substitués par au moins un atome d'halogène et/ou par au moins un groupe alkyle, par exemple un groupe alkyle inférieur ayant de 1 à 4 atomes de carbone, l'anhydride glutaconique et les anhydrides glutaconiques substitués par au moins un atome d'halogène et/ou par au moins un groupe alkyle, par exemple un groupe alkyle inférieur ayant de 1 à 4 atomes de carbone.

Le composé époxydé, ou époxyde aliphatique, utilisé dans le cadre de la présente invention est un composé ayant habituellement de 8 à 62 atomes de carbone, de préférence de 8 à 40 atomes de carbone et le plus souvent de 10 à 36 atomes de carbone dans sa molécule.

Dans le cadre de la présente invention, on utilise de préférence des composés monoépoxydés ou des mélanges de composés époxydés comprenant habituellement une proportion d'au moins 80 %, de préférence au moins 90 % et par exemple d'au moins 95 % en moles, de composés monoépoxydés et contenant des composés qui renferment plusieurs groupes époxydes (cycle oxirannes) dans leur molécule, par exemple 2 ou 3 groupes époxydes ; la proportion molaire des composés polyépoxydés dans le mélange représente le complément à 100 %.

L'époxyde aliphatique ayant au moins 8 atomes de carbone dans sa molécule que l'on emploie dans la présente invention est habituellement un composé monoépoxydé répondant à la formule générale (III) :

(III) 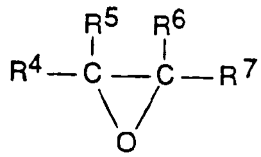

dans laquelle :

- $R^4$ et $R^6$, identiques ou différents, représentent chacun un atome d'hydrogène ou un groupe alkyle ayant de 1 à 4 atomes de carbone tel que défini ci-avant,
- $R^5$ et $R^7$, identiques ou différents, représentent chacun un atome d'hydrogène, un groupe alkyle, de préférence sensiblement linéaire, ayant de 1 à 60 atomes de carbone, de préférence de 1 à 38 atomes de carbone, et plus particulièrement de 6 à 38 atomes de carbone, un groupe alkoxyalkyle de formule $R^8$-O-$R^9$- dans laquelle $R^8$ représente un groupe alkyle, de préférence sensiblement linéaire, ayant de 1 à 59 atomes de carbone, de préférence de 1 à 37 atomes de carbone et plus particulièrement de 1 à 25 atomes de carbone, et $R^9$ représente un groupe alkylène, de préférence sensiblement linéaire, ayant de 1 à 59 atomes de carbone, de préférence de 1 à 37 atomes de carbone, la somme des atomes de carbone de $R^8$ et $R^9$ étant habituellement de 6 à 60, de préférence de 6 à 38 et plus particulièrement de 8 à 34.

Dans la formule (III) ci-avant, $R^5$ peut également représenter un groupe alkoxycarbonylalkylène de formule :

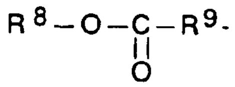

ou un groupe alkylcarbonyloxyalkylène de formule :

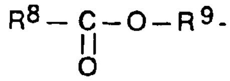

dans lesquelles $R^8$ et $R^9$ ont la définition donnée ci-avant.

Le composé époxydé aliphatique employé ayant au moins 8 atomes de carbone dans sa molécule est donc décrit par la formule générale (III) dans laquelle l'un au moins des groupes $R^4$ à $R^7$ a au moins 6 atomes de carbone.

Les composés monoépoxydés aliphatiques utilisés le plus souvent sont ceux dans lesquels $R^4$ et $R^6$ représentent chacun un atome d'hydrogène et de préférence ceux dans lesquels $R^4$, $R^6$ et $R^7$ représentent chacun un atome d'hydrogène.

A titre d'exemples de composés monoépoxydés préférés on peut citer les composés dans lesquels $R^4$, $R^6$ et $R^7$ représentent chacun un atome d'hydrogène et $R^5$ représente un groupe alkyle sensiblement linéaire ayant de 6 à 38 atomes de carbone ; un groupe alkoxyalkyle sensiblement linéaire, de formule $R^8$-O-$R^9$-,un groupe alkoxycarbonylalkylène de formule :

$$R^8-O-\underset{\underset{O}{\|}}{C}-R^9-$$

ou un groupe alkylcarbonyloxyalkylène de formule :

$$R^8-\underset{\underset{O}{\|}}{C}-O-R^9-$$

dans lesquelles $R^8$ représente un groupe alkyle, sensiblement linéaire, ayant de 1 à 37 atomes de carbone et de préférence de 1 à 25 atomes de carbone et $R^9$ représente un groupe alkylène, sensiblement linéaire, ayant de 1 à 37 atomes de carbone et de préférence de 1 à 25 atomes de carbone, la somme des atomes de carbone de $R^8$ et $R^9$ étant de 6 à 38 et de préférence de 8 à 34.

A titre d'exemples spécifiques de composés monoépoxydés aliphatiques, on peut citer: l'époxy-1,2 octane, l'époxy-1,2 nonane, l'époxy-1,2 décane, l'époxy-1,2 undécane, l'époxy-1,2 dodécane, l'époxy-1,2 tétradécane, l'époxy-1,2 pentadécane, l'époxy-1,2 hexadécane, l'époxy-1,2 heptadécane, l'époxy-1,2 octadécane, l'époxy-1,2 nonadécane, l'époxy-1,2 éicosane, l'époxy-1,2 docosane, l'époxy-1,2 tétracosane, l'époxy-1,2 hexacosane, les polybutènes époxydés de masse moléculaire moyenne ($\overline{M}n$) en nombre comprise entre environ 100 et environ 1000, l'époxy-2,3 octane, l'époxy-3,4 octane, l'époxy-3,4 décane, l'époxy-9,10 octadécane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemples méthylique, éthylique, n-propylique, isopropylique, n-butylique, sec-butylique, isobutylique, tertiobutylique, éthyl-2 hexylique et hexadécylique des acides époxy-3,4 nonanoique, époxy-10,11 undécanoique, époxy-6,7 octadécanoique, époxy-12,13 octadécanoique, époxy-11,12 octadécanoique, époxy-9,10 octadécanoique, époxy-11,12 éicosanoique et époxy-13,14 docosanoique.

A titre d'exemples spécifiques de mélange de composés époxydés comprenant des polyépoxydes, on peut citer le mélange d'esters alkyliques obtenu par estérification d'un mélange d'époxyacides résultant de l'époxydation d'un mélange d'acides gras éthyléniquement insaturés.

Le mélange d'acides gras éthyléniquement insaturé est par exemple un mélange comportant, en proportions pondérales approximatives données dans le tableau (I) ci-après, des acides ayant de 12 à 20 atomes de carbone dans leur molécule et contenant des acides saturés et insaturés ; ce mélange est habituellement dénommé oléine.

**Tableau I**

| ACIDES | $C_{12}^*$ | $C_{14}^*$ | $C_{14.1}$ | $C_{15}^*$ | $C_{16}^*$ | $C_{16.1}$ | $C_{17.1}$ | $C_{18}^*$ | $C_{18.1}$ | $C_{18.2}$ | $C_{18.3}$ | $C_{20.1}$ |
|---|---|---|---|---|---|---|---|---|---|---|---|---|
| %Poids | 0,8 | 2,7 | 1,0 | 0,5 | 5,0 | 5,5 | 1,5 | 1,5 | 68,0 | 10,0 | 2,5 | 1,0 |

* acides saturés

Dans le tableau (I) ci-avant, $C_{p.1}$ désigne des acides comportant une insaturation éthylénique, $C_{p.2}$ désigne des acides comportant 2 insaturations éthyléniques et $C_{p.3}$ désigne des acides comportant 3 insaturations éthyléniques (p est le nombre d'atomes de carbone de l'acide).

Pour l'estérification du mélange d'époxyacides, on utilise par exemple un mélange d'alcools comprenant en proportions pondérales approximatives environ 95 % d'alcool n-hexadécylique, 3 % d'alcool n-octadécylique et 2 % d'alcools ayant plus de 18 atomes de carbone dans leur molécule.

La condensation entre au moins un époxyde aliphatique tel que défini ci-avant et au moins un anhydride cyclique d'un acide dicarboxylique peut être effectuée en présence ou en absence de solvant. On préfère en général utiliser un solvant, tel que par exemple un solvant hydrocarboné. A titre d'exemples non limitatifs de solvants hydrocarbonés utilisables, on peut citer le benzène, le toluène, le xylène, l'éthylbenzène, le cyclohexane, l'hexane ou un mélange d'hydrocarbures tel que, par exemple, une coupe hydrocarbonée à point d'ébullition élevé telle qu'un gazole, un kérosène, ou la coupe commerciale SOLVESSO 150 (190-209°C) contenant 99

% en poids de composés aromatiques. On peut également utiliser des mélanges de solvants, par exemple un mélange de xylènes.

La réaction de condensation est habituellement effectuée à une température de 30 à 200°C, de préférence de 40 à 180°C et par exemple de 60 à 150°C. On opère habituellement sous pression normale ou sous la pression engendrée par les constituants du mélange, mais il est possible d'opérer sous une pression plus élevée.

La condensation entre l'anhydride cyclique et l'époxyde est en général effectuée en employant des quantités de chacun de ces deux composés telles que le rapport molaire époxyde/anhydride cyclique soit de 0,5 : 1 à 2 : 1, de préférence de 0,7 : 1 à 1,3 : 1 et par exemple de 0,9 : 1 à 1,1 : 1.

La durée de la réaction est habituellement de 1 heure à 24 heures et par exemple de 2 à 12 heures. Cette durée est de préférence celle qui correspond, dans les conditions choisies, à une disparition pratiquement complète de l'un des réactifs ( époxyde ou anhydride) mis en jeu dans la réaction.

Le catalyseur à base de titane peut être ajouté au mélange d'époxyde et d'anhydride soit sous forme solide ou liquide soit sous forme diluée (solution ou dispersion) dans un solvant qui est habituellement le même que celui employé pour la condensation.

La quantité de catalyseur à base de titane employée, exprimée en atome-gramme de titane pour 100 moles d'époxyde, est habituellement de 0,05 à 5 % et, de préférence, de 0,1 à 2 %.

Le polyester issu de la condensation selon l'invention est un composé qui présente habituellement une masse moléculaire moyenne en nombre de 400 à 50000 et dont les motifs issus de l'époxyde et de l'anhydride sont régulièrement alternés. Par ailleurs, l'utilisation des complexes de titane de la présente invention permet de réduire très largement l'homopolymérisation de l'époxyde par rapport à ce que l'on obtient en utilisant un titanate de tétraalkyle tel que par exemple le titanate de tétrabutyle, tout en conservant une vitesse de réaction élevée, ce qui permet aussi d'obtenir, à isoconditions, une conversion des produits de départs relativement élevée comme le montrent les exemples suivants.

Ces exemples illustrent l'invention. L'exemple 4 est donné à titre de comparaison.

**Exemple 1**

On introduit dans un réacteur de 100 ml, muni d'un système d'agitation et d'un système de régulation de la température, (14,7 g) 0,15 mole d'anhydride maléïque, (27,6 g) 0,15 mole d'époxy-1,2 dodécane, 7,4 g de phényldodécane, 17,6 g de toluène, et (0,64 g) 1,5 x $10^{-3}$ mole de complexe de titane de formule générale (I) définie ci-avant et dans laquelle chacun des groupes R représente un groupe isopropyle et chacun des groupes L représente l'ester éthylique de l'acide acétylacétique (ce composé de titane est un produit commercial vendu par exemple par la société TIOXIDE UK Limited).

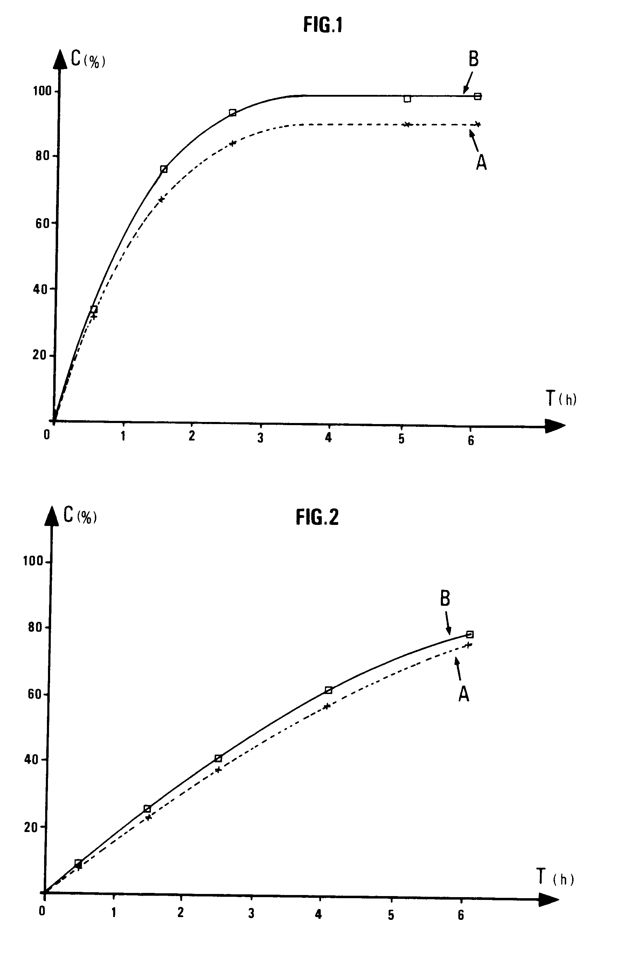

Le mélange obtenu dans le réacteur est porté à 100°C et maintenu, sous agitation constante, à cette température pendant 6 heures. La réaction est suivie par spectrométrie infrarouge (IR) et par Chromatographie d'Exclusion sur Gel (en anglais Gel Permeation Chromatography G P C). En spectrométrie infrarouge, on observe l'apparition d'une bande ester à 1730 $cm^{-1}$ et la disparition des bandes carbonyles de l'anhydride maleïque à $1770^{-1}$ et 1840 $cm^{-1}$. On a représenté sur la figure 1 le pourcentage de conversion de chacun des constituants en fonction du temps en heures (mesures par GPC; le phényldodécane présent dans le milieu de réaction est utilisé comme étalon interne). La courbe A concerne l'anhydride maléïque et la courbe B l'époxy-1,2 dodécane. Après 6 heures de réaction à 100°C, la conversion de l'époxyde est de 100 % et celle de l'anhydride maléïque de 92 %. Le polyester obtenu a une masse moléculaire moyenne en nombre, par rapport à un étalonnage sur polystyrène, de 5000. La figure 1 montre que les conversions de l'époxyde et de l'anhydride sont, en particulier pendant les 2 premières heures de la réaction, sensiblement égales à chaque instant, ce qui permet de conclure à la formation d'un polymère parfaitement alterné.

L'homopolymèrisation de l'époxyde est faible : elle n'atteint pas 10 % au bout des 6 heures de réaction.

**Exemple 2**

On opère dans les mêmes conditions que dans l'exemple 1, mais en employant un complexe de titane de formule générale (I) définie ci-avant et dans laquelle chacun des groupes R représente un groupe n-butyle et chacun des groupes L représente l'acétylacétone ( pentanedione-2,4 ).

Après 6 heures de réaction à 100°C, la conversion de l'époxyde est de 79 % et celle de l'anhydride maléïque de 77 %. On a représenté sur la figure 2 le pourcentage de conversion de chacun des constituants en fonction du temps en heures (mesures par GPC ; le phényldodécane présent dans le milieu de réaction est utilisé comme étalon interne). La courbe A concerne l'anhydride maléïque et la courbe B l'époxy 1,2 dodécane. La figure 2 montre que les conversions de l'époxyde et de l'anhydride sont sensiblement égales à chaque instant, ce qui permet de conclure à la formation d'un polymère parfaitement alterné.

**Exemple 3**

On répète l'exemple 1, mais on utilise comme complexe de titane un composé de formule générale (I) définie ci-avant dans laquelle chacun des groupes R représente un groupe isopropyle et chacun des groupes L représente l'acétylacétone (pentanedione-2,4 ). Après 6 heures de réaction à 100°C, la conversion de l'époxyde est de 99 % et celle de l'anhydride maléïque de 94 %. On a représenté sur la figure 3 le pourcentage de conversion de chacun des constituants en fonction du temps en heures (mesures par GPC; le phényldodécane présent dans le milieu de réaction est utilisé comme étalon interne). La courbe A concerne l'anhydride maléïque et la courbe B l'époxy-1,2 dodécane. La figure 3 montre que les conversions de l'époxyde et de l'anhydride sont, en particulier pendant les premières heures de la réaction, sensiblement égales à chaque instant, ce qui permet de conclure à la formation d'un polymère parfaitement alterné.

L'homopolymèrisation de l'époxyde est faible : elle n'atteint pas 10 % au bout des 6 heures de réaction.

**Exemple 4**

On opère dans les mêmes conditions que dans l'exemple 3, mais en introduisant, dans le mélange réactionnel, 0,92 ml d'une solution dans le toluène, à 50 % en poids de titanate de tétrabutyle de formule $Ti(OC_4H_9)_4$ ($1,5 \times 10^{-3}$ mole) comme catalyseur à base de titane. On a représenté sur la figure 4 le pourcentage de conversion de chacun des constituants en fonction du temps en heures (mesures par GPC; le phényldodécane présent dans le milieu de réaction est utilisé comme étalon interne). La courbe A concerne l'anhydride maléïque et la courbe B l'époxy-1,2 dodécane. La figure 4 montre que la conversion de l'époxyde est nettement plus rapide que celle de l'anhydride dès le début de la réaction. Le polymère obtenu n'est pas un polymère parfaitement alterné. L'homopolymérisation de l'époxyde est assez élevée et elle dépasse largement 20 % au bout des 6 heures de réaction à 80°C.

**Exemple 5**

On répète l'exemple 3, mais en remplaçant l'époxy-1,2 dodécane par l'ester éthyl-2 hexylique de l'acide époxy-9,10 octadécanoique. Après 6 heures de réaction à 100°C, la conversion de l'époxyde est de 64 % et celle de l'anhydride maléïque de 59 %.

**Revendications**

1. Procédé de condensation d'au moins un époxyde aliphatique ayant au moins 8 atomes de carbone dans sa molécule sur au moins un anhydride cyclique d'un acide dicarboxylique en présence d'un catalyseur à base d'au moins un complexe de titane de formule générale (I) :

   (I) $Ti(OR)_2(L)_2$

   dans laquelle chacun des groupes R indépendamment représente un groupe hydrocarboné ayant de 1 à 10 atomes de carbone et chacun des groupes L indépendamment représente un ligand de formule générale (II) :

   (II) 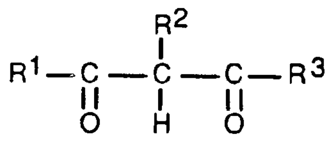

   dans laquelle :
   - . $R^1$ et $R^2$ représentent chacun, indépendammment l'un de l'autre, un atome d'hydrogène, un groupe hydrocarboné ayant de 1 à 10 atomes de carbone, substitué ou non par au moins un hétéroatome ou par au moins un groupe hétéroatomique,
   - . $R^3$ représente un atome d'hydrogène, un groupe hydrocarboné ayant de 1 à 10 atomes de carbone, ou un groupe de formule générale $-O-R^4$ dans laquelle $R^4$ représente un groupe hydrocarboné ayant de 1 à 24 atomes de carbone.

2. Procédé selon la revendication 1 dans lequel ledit complexe de titane répond à la formule générale (I)

dans laquelle chacun des groupes L indépendamment représente un ligand de formule générale (II) dans laquelle :

. $R^2$ représente un atome d'hydrogène ou un groupe alkyle ayant de 1 à 6 atomes de carbone,
. $R^1$ et $R^3$, identiques ou différents, représentent chacun un groupe alkyle ayant de 1 à 6 atomes de carbone.

3. Procédé selon la revendication 1 ou 2 dans lequel ledit complexe de titane répond à la formule générale (I) dans laquelle chacun des groupes L, identiques, représente un ligand de formule générale (II) choisi parmi les composés suivants : la pentanedione-2,4, l'hexanedione-2,4, l'heptanedione-2,4, l'heptanedione-3,5, l'éthyl-3 pentanedione-2,4, la méthyl-5 hexanedione-2,4, l'octanedione-2,4, l'octanedione-3,5, la diméthyl-5,5 hexanedione-2,4, la méthyl-6 heptanedione-2,4, la diméthyl-2,2 nonanedione-3,5 et la diméthyl-2,6 heptanedione-3,5.

4. Procédé selon la revendication 1 dans lequel ledit complexe de titane répond à la formule générale (I) dans laquelle chacun des groupes L indépendamment représente un ligand de formule générale (II) dans laquelle :

. $R^2$ représente un atome d'hydrogène ou un groupe alkyle ayant de 1 à 6 atomes de carbone,
. $R^1$ représente un groupe alkyle ayant de 1 à 6 atomes de carbone, et
. $R^3$ représente un groupe de formule générale $-O-R^4$ dans laquelle $R^4$ représente un groupe alkyle ayant de 1 à 18 atomes de carbone.

5. Procédé selon la revendication 1 ou 4 dans lequel ledit complexe de titane répond à la formule générale (I) dans laquelle chacun des groupes L, identiques, représente un ligand de formule générale (II) choisi parmi les composés suivants : les esters méthylique, éthylique, n-propylique, isopropylique, n-butylique, sec-butylique, isobutylique, tertiobutylique, isopentylique, n-hexylique, n-octylique, méthyl 1 heptylique, n-nonylique, n-décylique et n-dodécylique de l'acide acétylacétique.

6. Procédé selon l'une des revendications 1 à 5 dans lequel ledit complexe de titane répond à la formule générale (I) dans laquelle chacun des groupes R indépendamment représente un groupe alkyle ayant de 1 à 6 atomes de carbone, et de préférence un groupe alkyle ayant de 1 à 4 atomes de carbone tel que méthyle, éthyle, n-propyle, isopropyle, n-butyle, isobutyle, tertiobutyle et méthyl-1 propyle.

7. Procédé de condensation d'au moins un époxyde aliphatique sur au moins un anhydride cyclique d'un acide dicarboxylique selon l'une des revendications 1 à 6 dans lequel ledit anhydride est un anhydride d'un acide dicarboxylique vicinal, saturé ou insaturé.

8. Procédé selon l'une des revendications 1 à 6 dans lequel l'anhydride cyclique d'un acide dicarboxylique est choisi parmi les composés suivants : l'anhydride maléïque, l'anhydride citraconique, les anhydrides halogénomaléiques, l'anhydride succinique, les anhydrides alcénylsucciniques ou polyalcénylsucciniques, l'anhydride phtalique, les anhydrides phtaliques substitués par au moins un atome d'halogène et/ou par au moins un groupe alkyle, l'anhydride trimellitique, l'anhydride cyclohexanedicarboxylique-1,2, les anhydrides cyclohexanedicarboxyliques-1,2 substitués par au moins un atome d'halogène et/ou par au moins un groupe alkyle, l'anhydride nadique, les anhydrides nadiques substitués par au moins un atome d'halogène et/ou par au moins un groupe alkyle, l'anhydride glutarique, les anhydrides glutariques substitués par au moins un atome d'halogène et/ou par au moins un groupe alkyle, l'anhydride glutaconique et les anhydrides glutaconiques substitués par au moins un atome d'halogène et/ou par au moins un groupe alkyle.

9. Procédé selon l'une des revendications 1 à 8 dans lequel l'époxyde aliphatique ayant au moins 8 atomes de carbone dans sa molécule est choisi parmi les époxydes de formule générale (III) :

(III) 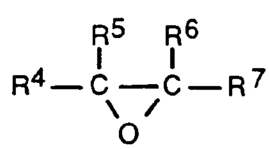

dans laquelle:

. $R^4$ et $R^6$, identiques ou différents, représentent chacun un atome d'hydrogène ou un groupe alkyle

ayant de 1 à 4 atomes de carbone,

. $R^5$ et $R^7$, identiques ou différents, représentent chacun un atome d'hydrogène, un groupe alkyle ayant de 1 à 60 atomes de carbone, un groupe alkoxyalkyle de formule $R^8$-O-$R^9$- dans laquelle $R^8$ représente un groupe alkyle ayant de 1 à 59 atomes de carbone et $R^9$ représente un groupe alkylène ayant de 1 à 59 atomes de carbone, $R^5$ pouvant également représenter un groupe alkoxycarbonylalkylène de formule :

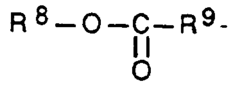

ou un groupe alkylcarbonyloxyalkylène de formule :

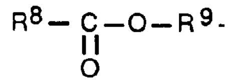

dans lesquelles $R^8$ et $R^9$ ont la définition donnée ci-avant, et l'un au moins des groupes $R^4$ à $R^7$ ayant au moins 6 atomes de carbone.

**10.** Procédé selon l'une des revendications 1 à 9 dans lequel l'époxyde aliphatique ayant au moins 8 atomes de carbone dans sa molécule est choisi parmi les époxydes ou composés époxydés suivants : l'époxy-1,2 octane, l'époxy-1,2 nonane, l'époxy-1,2 décane, l'époxy-1,2 undécane, l'époxy-1,2 dodécane, l'époxy-1,2 tétradécane, l'époxy-1,2 pentadécane, l'époxy-1,2 hexadécane, l'époxy-1,2 heptadécane, l'époxy-1,2 octadécane, l'époxy-1,2 nonadécane, l'époxy-1,2 éicosane, l'époxy-1,2 docosane, l'époxy-1,2 tétracosane, l'époxy-1,2 hexacosane, les polybutènes époxydés de masse moléculaire moyenne en nombre ($\overline{Mn}$) comprise entre 100 et 1000, l'époxy-2,3 octane, l'époxy-3,4 octane, l'époxy-3,4 décane, l'époxy-9,10 octadécane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemples méthylique, éthylique, n-propylique, isopropylique, n-butylique, sec-butylique, isobutylique, tertiobutylique, éthyl 2 hexylique et hexadécylique des acides époxy-3,4 nonanoique, époxy-10,11 undécanoique, époxy-6,7 octadécanoique, époxy-12,13 octadécanoique, époxy-11,12 octadécanoique, époxy-9,10 octadécanoique, époxy-11,12 éicosanoique et époxy-13,14 docosanoique.

## Patentansprüche

**1.** Verfahren zur Kondensation von mindestens einem aliphatischem Epoxid mit mindestens 8 Kohlenstoffatomen im Molekül mit mindestens einem cyclischen Anhydrid einer Dicarbonsäure in Gegenwart eines Katalysators auf der Basis von mindestens einem Titankomplex der allgemeinen Formel (I):

$$\text{(I)} \qquad Ti(OR)_2(L)_2$$

bei dem jede der Gruppen R unabhängig voneinander eine Kohlenwasserstoffgruppe mit einem bis 10 Kohlenstoffatomen und jede der Gruppen L unabhängig voneinander einen Liganden der allgemeinen Formel (II) darstellt:

(II) 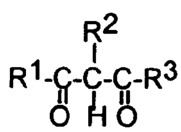

in der

- $R^1$ und $R^2$ jeder, unabhängig voneinander ein Wasserstoffatom, eine Kohlenwasserstoffgruppe mit einem bis 10 Kohlenstoffatomen, mit mindestens einem Heteroatom oder mindestens einer Heteroatomgruppe substituiert oder nicht, darstellen,

- $R^3$ ein Wasserstoffatom, eine Kohlenwasserstoffgruppe mit einem bis 10 Kohlenstoffatomen oder eine Gruppe mit der allgemeinen Formel -O-$R^4$ darstellt, wobei $R^4$ eine Kohlenwasserstoffgruppe mit einem bis 24 Kohlenstoffatomen darstellt.

2. Verfahren nach Anspruch 1, bei dem der besagte Titankomplex der allgemeinen Formel (I) entspricht, in der jede der Gruppen L unabhängig voneinander einen Liganden der allgemeinen Formel (II) darstellt, bei dem:
   - $R^2$ ein Wasserstoffatom oder eine Alkylgruppe mit einem bis 6 Kohlenstoffatomen darstellt,
   - $R^1$ und $R^3$, identisch oder voneinander verschieden, jeder eine Alkylgruppe mit einem bis 6 Kohlenstoffatomen darstellt,

3. Verfahren nach Anspruch 1, bei dem der besagte Titankomplex der allgemeinen Formel (I) entspricht, in der jede der Gruppen L identisch einen Liganden der allgemeinen Formel (II) darstellt, der unter den folgenden Verbindungen gewählt wird: 2,4-Pentandion, 2,6 Hexandion, 2,4-Heptandion, 3,5-Heptandion, 3-Ethyl-2,4-pentandion, 5-Methyl-2,4-hexandion, 2,4-Octandion, 3,5-Octandion, 5,5-Dimethyl-2,4-hexandion, 6-Methyl-2,4-heptandion, 2,2-Dimethyl-3,5-nonandion und 2,6-Dimethyl-35-heptandion.

4. Verfahren nach Anspruch 1, bei dem der besagte Titankomplex der allgemeinen Formel (I) entspricht, in der jede der Gruppen L unabhängig voneinander einen Liganden der allgemeinen Formel(II) darstellt, in der
   - $R^2$ ein Wasserstoffatom oder eine Alkylgruppe mit einem bis 6 Kohlenstoffatonen darstellt,
   - $R^1$ eine Alkylgruppe mit einem bis 6 Kohlenstoffatonen darstellt und
   - $R^3$ eine Gruppe mit der allgemeinen Formel -O-$R^4$ darstellen, wobei $R^4$ eine Kohlenwasserstoffgruppe mit einem bis 18 Kohlenstoffatomen darstellt.

5. Verfahren nach Anspruch 1 oder 4, bei dem der besagte Titankomplex der allgemeinen Formel (I) entspricht, in der jede der Gruppen L identisch einen Liganden der allgemeinen Formel (II) darstellt, der unter den folgenden Verbindungen gewählt wird: den Methyl-, Ethyl-, n-Propyl-, Isopropyl-, n-Butyl-, sec.-Butyl-, Isobutyl-, tert.-Butyl-, Isopentyl-, n-Hexyl-, n-Octyl-, 1-Methylheptyl, n-Nonyl,- n-Decyl- und n-Dodecylestem der Acetylessigsäure.

6. Verfahren nach einem der Ansprüche 1 bis 5, bei dem der besagte Titankomplex der allgemeinen Formel (I) entspricht, in der jede der Gruppen R unabhängig voneinander eine Alkylgruppe mit einem bis 6 Kohlenstoffatomen und vorzugsweise mit einem bis 4 Kohlenstoffatomen darstellt, wie Methyl- Ethyl, n-Propyl, Isopropyl, n-Butyl, Isobutyl, tert.-Butyl und 1-Methylpropyl.

7. Verfahren zur Kondensation von mindestens einem aliphatischem Epoxid mit mindestens einem cyclischen Anhydrid einer Dicarbonsäure, wobei das Anhydrid ein Anhydrid einer vicinalen, gesättigten oder ungesättigten Dicarbonsäure ist.

8. Verfahren nach einem der Ansprüche 1 bis 6, bei dem das cyclische Anhydrid einer Dicarbonsäure unter den folgenden Verbindungen ausgewählt wird: Maleinsäureanhydrid, Citraconsäureanhydrid, die Halogenmaleinsäureanhydride, Bemsteinsäureanhydrid, die Alkenylbemsteinsäure- oder Polyalkenylbernsteinsäureanhydride, Phthalsäureanhydrid, die mit mindestens einem Halogenatom und/oder mindestens einer Alkylgruppe substituierten Phthalsäureanhydride, Trimellitsäureanhydrid, 1,2-Cyclohexandicarbonsäureanhydrid, die mit mindestens einem Halogenatom und/oder mindestens einer Alkylgruppe substituierten 1.2-Cyclohexandicarbonsäureanhydride, Nadinsäureanhydrid, die mit mindestens einem Halogenatom und/oder mindestens einer Alkylgruppe substituierten Nadinsäureanhydride, Glutarsäureanhydrid, die mit mindestens einem Halogenatom und/oder mindestens einer Alkylgruppe substituierten Glutarsäureanhydride, Glutaconsäureanhydrid und die mit mindestens einem Halogenatom und/oder mindestens einer Alkylgruppe substituierten Glutaconsäureanhydride.

9. Verfahren nach einem der Ansprüche 1 bis 8, bei dem das aliphatische Epoxid mit mindestens 8 Kohlenstoffatomen pro Molekül unter den Epoxiden mit der allgemeinen Formel (III) gewählt wird:

(III) 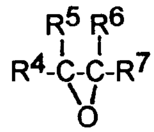

bei der

- $R^4$ und $R^6$, gleich oder voneinander verschieden, ein Wasserstoffatom oder eine Kohlenwasserstoffgruppe mit einem bis 4 Kohlenstoffatomen darstellen,
- $R^5$ und $R^7$, gleich oder voneinander verschieden, jeder ein Wasserstoffatom, eine Alkylgruppe mit einem bis 60 Kohlenstoffatomen, eine Alkoxialkylgruppeder Formel $R^8$-O-$R^9$, bei der $R^8$ eine Alkylgruppe mit einem bis 59 Kohlenstoffatomen und $R^9$ eine Alkylengruppe mit einem bis 59 Kohlenstoffatomen ist, darstellen, $R^5$ kann ebenfalls eine Alkoxycarbonylalkylengruppe der Formel:

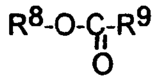

oder eine Alkylcarbonyloxialkylengruppe der Formel

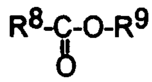

darstellen, bei denen $R^8$ und $R^9$ die oben gegebene Definition haben und zumindest eine der Gruppen $R^4$ bis $R^7$ hat mindestens 6 Kohlenstoffatome.

**10.** Verfahren nach einen der Ansprüche 1 bis 9, bei dem das aliphatische Epoxid mit mindestens 8 Kohlenstoffatomen im Molekül unter den folgenden Epoxiden oder Epoxiverbindungen ausgewählt wird: 1,2-Epoxioctan, 1,2-Epoxinonan, 1,2-Epoxidecan, 1,2-Epoxiundecan, 1,2-Epoxidodecan, 1,2-Epoxitetradecan, 1,2-Epoxipentadecan, 1,2-Epoxihexadecan, 1,2-Epoxiheptadecan, 1,2-Epoxioctadecan, 1,2-Epoxinonadecan, 1,2-Epoxieicosan, 1,2-Epoxidocosan, 1,2-Epoxitetracosan, 1,2-Epoxihexacosan, epoxidierte Polybutene mit einer mittleren Molekülmasse (Mn) in einer Größenordnung zwischen einschließlich etwa 100 und etwa 1000, 2,3-Epoxioctan, 3,4-Epoxioctan, 3,4-Epoxidecan, 9,10-Epoxioctadecan, 3-Pentyloxi-1,2-epoxipropan, 3-Hexyloxi-1,2-epoxipropan, 3-Heptyloxi-1,2-epoxipropan, 3-Octyloxi-1,2-epoxipropan, 3-Decyloxi-1,2-epoxipropan, 3-Dodecyloxi-1,2-epoxipropan, 1-Lauroyloxi-2, 3-epoxipropan, 3-Myristoyloxi-1,2-epoxipropan, 3-Palmitoyloxi-1,2-epoxipropan, 3-Stearoyloxi-1,2-epoxipropan, die Alkylester, z.B. Methyl-, Ethyl-, n-Propyl-, Isopropyl-, n-Butyl-, sec-Butyl-, iso-Butyl-, tert.-Butyl-, 2-Ethylhexyl- und Hexadecylester der 3,4-Epoxinonansäure, 10, 11-Epoxiundecansäure, 6,7-Epoxioctadecansäure, 12, 13-Epoxioctadecansäure, 11,12- Epoxioctadecansäure, 9,10-Epoxioctadecansäure, 11,12-Epoxieicosansäure und 13,14-Epoxidocosansäure.

## Claims

**1.** Process for the condensation of at least one aliphatic epoxide having at least 8 carbon atoms in its molecule on at least one cyclic anhydride of a dicarboxylic acid in the presence of a catalyst based on at least one titanium complex of general formula (I):

(I) $Ti(OR)_2(L)_2$

in which each of the R groups, independently represents a hydrocarbon group having 1 to 10 carbon atoms, and each of the L groups independently represents a ligand of general formula (II):

(II) 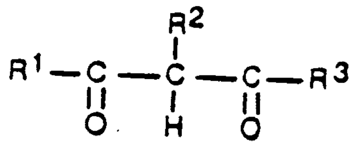

in which:

- $R^1$ and $R^2$ in each case represent, independently of one another, a hydrogen atom, a hydrocarbon group having 1 to 10 carbon atoms, which may or may not be substituted by a heteroatom or by at least one hetero-atomic group,
- $R^3$ represents a hydrogen atom, a hydrocarbon group having 1 to 10 carbon atoms, or a group of general formula -O-$R^4$, in which $R^4$ represents a hydrocarbon group having 1 to 24 carbon atoms.

**2.** Process according to claim 1, wherein said titanium complex complies with the general formula (I), in which each of the L groups independently represents a ligand of general formula (II) in which:

- $R^2$ represents a hydrogen atom or an alkyl group having 1 to 6 carbon atoms,
- $R^1$ and $R^3$ , which can be the same or different, in each case represent an alkyl group having 1 to 6 carbon atoms.

**3.** Process according to claim 1 or 2, wherein said titanium complex complies with the general formula (I), in which each of the identical L groups represents a ligand of general formula (II) chosen from among 2,4-pentanedione, 2,4-hexanedione, 2,4-heptanedione, 3,5-heptanedione, 3-ethyl-2,4-pentanedione, 5-methyl-2,4-hexanedione, 2,4-octanedione, 3,5-octanedione, 5,5-dimethyl-2,4-hexanedione, 6-methyl-2,4-heptanedione, 2,2-dimethyl-3,5-nonanedione and 2,6-dimethyl-3,5-heptanedione.

**4.** Process according to claim 1, wherein said titanium complex complies with the general formula (I) in which each of the L groups independently represents a ligand of general formula (II), in which:

- $R^2$ represents a hydrogen atom or an alkyl group having 1 to 6 carbon atoms,
- $R^1$ represents an alkyl group having 1 to 6 carbon atoms and
- $R^3$ represents a group of general formula -O-$R^4$, in which $R^4$ represents an alkyl group having 1 to 18 carbon atoms.

**5.** Process according to claim 1 or 4, wherein said titanium complex complies with the general formula (I) in which each of the identical L groups represents a ligand of general formula (II) chosen from among methyl, ethyl, n-propyl, isopropyl, n-butyl, sec-butyl, isobutyl, tert.-butyl , isopentyl , n-hexyl, n-octyl, 1-methylheptyl , n-nonyl, n-decyl and n-dodecyl esters of acetyl acetic acid.

**6.** Process according to any one of the claims 1 to 5, wherein said titanium complex complies with the general formula (I) in which each of the R groups independently represents an alkyl group having 1 to 6 carbon atoms and preferably an alkyl group having 1 to 4 carbon atoms such as methyl, ethyl, n-propyl, isopropyl, n-butyl, isobutyl, tert.-butyl and 1-methylpropyl.

**7.** Process for the conversion of at least one aliphatic epoxide on at least one cyclic anhydride of a dicarboxylic acid according to any one of the claims 1 to 6, wherein said anhydride is an anhydride of a saturated or unsaturated, neighbouring dicarboxylic acid.

**8.** Process according to any one of the claims 1 to 6, wherein the cyclic anhydride of a dicarboxylic acid is chosen from among maleic anhydride, citraconic anhydride, halogenomaleic anhydrides, succinic anhydrides, alkenyl succinic or polyalkenyl succinic anhydrides, phthalic anhydrides, phthalic anhydrides substituted by at least one halogen atom and/or by at least one alkyl group, trimellitic anhydride, cyclohexane-1,2-dicarboxylic anhydride, cyclohexane-1,2-dicarboxylic anhydride substituted by at least one halogen atom and/or by at least one alkyl group, nadic anhydride, nadic anhydride substituted by at least one halogen atom and/or by at least one alkyl group, glutaric anhydride, glutaric anhydride substituted by at least one halogen atom and/or by at least one alkyl group, glutaconic anhydride and glutaconic anhydride substituted by at least one halogen atom and/or by at least one alkyl group.

**9.** Process according to any one of the claims 1 to 8, wherein the aliphatic epoxide having at least 8 carbon atoms in its molecule is chosen from among epoxides of general formula (III):

(III) 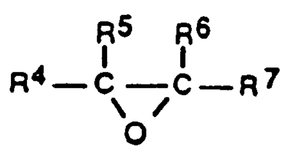

in which:

- $R^4$ and $R^6$, which can be the same or different, in each case represent a hydrogen atom or an alkyl group having 1 to 4 carbon atoms,
- $R^5$ and $R^7$, which can be the same or different, in each case represent a hydrogen atom, an alkyl group having 1 to 60 carbon atoms, an alkoxy alkyl group of formula $R^8$-O-$R^9$ , in which $R^8$ represents an alkyl group having 1 to 59 carbon atoms and $R^9$ represents an alkylene group having 1 to 59 carbon atoms and $R^5$ can also represent an alkoxycarbonyl alkylene group of formula:

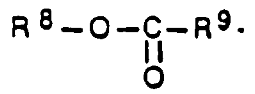

or an alkylcarbonly oxyalkylene group of formula:

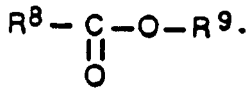

in which $R^8$ and $R^9$ have the definition given hereinbefore and at least one of the groups $R^4$ to $R^7$ has at least 6 carbon atoms.

**10.** Process according to any one of the claims 1 to 9, wherein the aliphatic epoxide having at least 8 carbon atoms in its molecule is chosen from among the epoxides or epoxidized compounds given hereinafter: 1,2-epoxyoctane, 1,2-epoxynonane, 1,2-epoxydecane, 1,2-epoxyundecane, 1,2-epoxydodecane, 1,2-epoxytetradecane, 1,2-epoxypentadecane, 1,2-epoxyhexadecane, 1.2-epoxyheptadecane, 1,2-epoxyoptadecane, 1,2-epoxynonadecane, 1,2-epoxyeicosane, 1,2-epoxydocosane, 1,2-epoxytetracosane, 1,2-epoxyhexacosane, epoxidized polybutenes of number average molecular weight ($\overline{M}n$) between 100 and 1000, 2,3-epoxyoctane, 3,4-epoxyoctane, 3,4-epoxydecane, 9,10-epoxyoctadecane, 3-pentyloxy-1,2-epoxypropane, 3-hexyloxy-1,2-epoxypropane, 3-heptyloxy-1,2-epoxypropane, 3-octyloxy-1,2-epoxypropane, 3-decyloxy-1,2-epoxypropane, 3-dodecyloxy-1,2-epoxypropane, 1-lauryloxy-2,3-epoxypropane, 3-myristoyloxy-1,2-epoxypropane, 3-palmitoyloxy-1,2-epoxypropane, 3-stearoyloxy-1,2-epoxypropane, alkyl esters, e.g. methyl, ethyl, n-propyl, isopropyl , n-butyl, sec-butyl, isobutyl, tert.-butyl, 2-ethylhexyl and hexadecyl esters of 3,4-epoxy nonanoic, 10,11-epoxy undecanoic, 6,7-epoxy octadecanoic, 12,13-epoxy octadecanoic, 11,12-epoxy octadecanoic, 9,10-epoxy octadecanoic, 11,12-epoxy eicosanoic and 13,14-epoxy docosanoic acids.

FIG.1

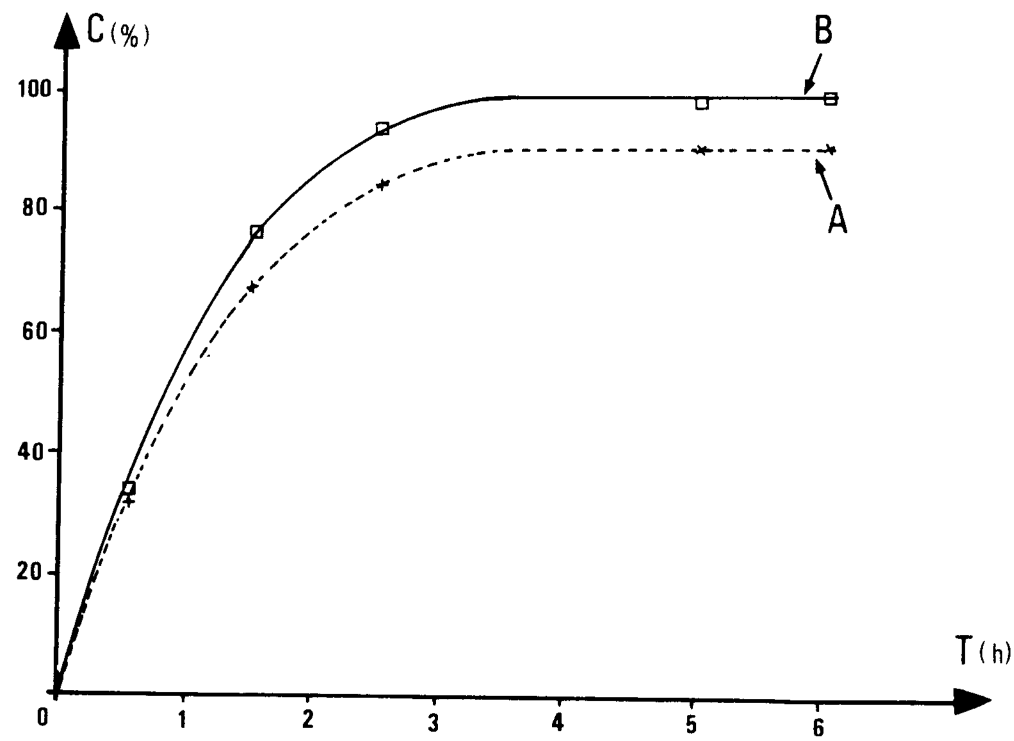


FIG.2